# EUROPÄISCHE PATENTSCHRIFT

(11) **EP 3 160 775 B1**
(45) Veröffentlichungstag und Bekanntmachung des Hinweises auf die Patenterteilung: **13.06.2018**
(21) Anmeldenummer: 15741921.9
(22) Anmeldetag: 07.04.2015
(51) Int. Cl.: B60C 11/13, B60C 11/03

(54) **FAHRZEUGLUFTREIFEN**
PNEUMATIC VEHICLE TIRE
PNEUMATIQUE DE VEHICULE

(30) Priorität: 26.06.2014 DE 102014212352
(43) Veröffentlichungstag der Anmeldung: 03.05.2017
(73) Patentinhaber: Continental Reifen Deutschland GmbH, 30165 Hannover (DE)
(72) Erfinder: BEHR, Ulrich, 30167 Hannover (DE); FISCHER, Markus, 30823 Garbsen (DE)
(74) Vertreter: Finger, Karsten
(86) Internationale Anmeldenummer: PCT/EP2015/057429
(87) Internationale Veröffentlichungsnummer: WO 2015/197212

(56) Entgegenhaltungen:
- EP-B1- 1 637 357
- WO-A1-2014/048635
- JP-A- H01 204 805
- US-A1- 2005 092 413

## Beschreibung

Die Erfindung betrifft einen Fahrzeugluftreifen mit einem Laufstreifen mit einer schulterseitigen Blockreihe, deren Blöcke durch zumindest im Wesentlichen in Querrichtung verlaufende Querrillen voneinander getrennt sind, und welche durch eine Umfangsrille von einer weiteren Blockreihe oder einem blockartigen strukturierten. Profilband getrennt ist, in welcher bzw. in welchem weitere, zumindest im Wesentlichen in Querrichtung verlaufende Querrillen vorgesehen sind, wobei die Umfangsrille an der Laufstreifenoberfläche von zwei parallel zueinander und in Umfangsrichtung verlaufenden Kanten begrenzt ist und sich aus Umfangsabschnitten zusammensetzt, in welchen der Rillengrund jeweils unter einem spitzen Winkel zur Umfangsrichtung verläuft und ein axial laufstreifenaußenseitig und ein axial laufstreifeninnenseitig gelegenes Ende aufweist, wobei zwischen dem Rillengrund und der Laufstreifenoberfläche Rillenflanken verlaufen, deren Neigungswinkel zur radialen Richtung sich über die Umfangserstreckung des Umfangsabschnittes kontinuierlich und zueinander gegenläufig ändern.

Ein derartiger Fahrzeugluftreifen ist aus der EP 1 637 357 B1 bekannt. Die Umfangsabschnitte der zwischen der schulterseitigen Blockreihe und der zu dieser benachbart verlaufenden Blockreihe angeordneten Umfangsrille verlaufen jeweils zwischen den im Wesentlichen zueinander fluchtend angeordneten Querrillen aus den beiden Blockreihen. Die Rillenflanken in den Umfangsabschnitten sind bezüglich ihrer Neigung zur radialen Richtung derart ausgeführt, dass sich ihre Neigungswinkel zur radialen Richtung über die Umfangserstreckung der Umfangsabschnitte zwar gegenläufig ändern, aber bezüglich der Größe der Winkel übereinstimmen. Gegenüber Laufstreifen mit einer herkömmlich "symmetrisch" ausgeführten Umfangsrille wird im betrachteten Laufstreifenbereich mit einer derartigen Umfangsrille eine Verbesserung des Wasserableitvermögens erzielt, daher die Entwässerung verbessert, der bekannte

Laufstreifen ist jedoch hinsichtlich Quersteifigkeit verbesserungswürdig. Vor allem bei höherer Handlingbeanspruchung der Reifen, insbesondere bei sportlicher Fahrweise, zeigen sich mangels ausreichender Quersteifigkeit nicht zufriedenstellende Handlingeigenschaften. Dies ist unter anderem auch darauf zurückzuführen, dass eine gute Entwässerung meist mit einer reduzierten Steifigkeit der betreffenden Profilbereiche im Laufstreifen einhergeht.

Die US 2005/0092413 A1 offenbart einen weiteren Fahrzeugluftreifen der eingangs genannten Art. Aus der WO 2014/048635 A1 ist ein Fahrzeugluftreifen bekannt, dessen Laufstreifen eine schulterseitige Blockreihe aufweist, deren Blöcke jeweils von einem sich in Umfangsrichtung erstreckenden Einschnitt durchquert sind. Jeder Einschnitt weist, im Querschnitt betrachtet, am Einschnittgrund einen schmalen Durchgangskanal auf. Radial außerhalb des Kanals ist der Einschnitt von zur radialen Richtung geneigten Einschnittwänden begrenzt. Die Neigungswinkel der Einschnittwände ändern sich über die Umfangserstreckung der Einschnittwände zueinander entgegensetzt und kontinuierlich.

Der Erfindung liegt somit die Aufgabe zugrunde, einen Reifen mit einem Laufstreifen der eingangs genannten Art zu verbessern, um bei guter Entwässerung und guten Nassbremseigenschaften auch eine sehr gute Quersteifigkeit, die den Reifen auch für einen Einsatz mit hohen Handlingbeanspruchungen geeignet macht, aufweist.

Gelöst wird die gestellte Aufgabe erfindungsgemäß dadurch, dass sich in jedem Umfangsabschnitt der Neigungswinkel der axial laufstreifeninnenseitig befindlichen Rillenflanke in einem größeren Ausmaß ändert als der Neigungswinkel der gegenüberliegenden Rillenflanke.

Durch die speziell gestalteten Umfangsabschnitte und den Verlauf der Rillenflanken in den Umfangsabschnitten ist eine sehr gute Entwässerung des Laufstreifens in diesem Laufstreifenbereich gewährleistet. Der unterschiedliche Verlauf der Neigung der beiden Rillenflanken hat Abstützeffekte zu den benachbarten Profilpositiven zur Folge, die eine hohe Quersteifigkeit bewirken.

Für die erwähnten Abstützeffekte ist es besonders vorteilhaft, wenn sich der Neigungswinkel der laufstreifeninnenseitig befindlichen Rillenflanke um mindestens 3°, insbesondere um mindestens 5° mehr ändert als der Neigungswinkel der gegenüberliegenden Rillenflanke. Dabei sind bestimmte Winkelbereiche für eine gleichmäßige Quersteifigkeit besonders günstig. Bei einer bevorzugten Ausführung der Erfindung ändert sich der Neigungswinkel der laufstreifenaußenseitig befindlichen Rillenflanke vom laufstreifenaußenseitigen Ende des Rillengrundes bis zum laufstreifeninnenseitigen Ende des Rillengrundes von 0° bis 7° zu 25° bis 40°, der Neigungswinkel der gegenüberliegenden Rillenflanke vom laufstreifenaußenseitigen Ende des Rillengrundes bis zum laufstreifeninnenseitigen Ende des Rillengrundes von 40° bis 60° zu 10° bis 35°.

Eine gute Entwässerung der Umfangsrille wird erfindungsgemäß dadurch unterstützt, dass sich die Umfangsabschnitte zwischen den Querrillen des weiter laufstreifeninnenseitig gelegenen, blockartig strukturierten Profilbandes bzw. der hier befindlichen Blockreihe erstrecken und die Querrillen der schulterseitigen Blockreihe jeweils etwa mittig in einen Umfangsabschnitt einmünden.

Um insbesondere bei höherer Handlingbeanspruchung des Fahrzeugluftreifens Spannungsspitzen am Rillengrund zu vermeiden, ist es von Vorteil, wenn die weiter laufstreifeninnenseitig verlaufende Rillenflanke des Umfangsabschnittes über eine Übergangsrundung in den Rillengrund übergeht, wobei der Rundungsradius der Übergangsrundung insbesondere 1,0 mm bis 2,0 mm beträgt. In diesem Zusammenhang ist es auch günstig, wenn der Rillengrund eine Breite von 1,0 mm bis 1,5 mm aufweist.

Bei sportlicher Fahrweise werden besonders die bei der Außenschulter befindlichen Profilbereiche des Laufstreifens eines Reifens beansprucht. Es ist daher vorteilhaft, wenn gemäß der Erfindung die in den Ansprüchen erwähnte schulterseitige Blockreihe zumindest jene ist, die in dem der Außenschulter des Fahrzeugluftreifens zugeordneten Bereich des Laufstreifens verläuft.

Weitere Merkmale, Vorteile und Einzelheiten der Erfindung werden nun anhand der Zeichnung, die ein Ausführungsbeispiel der Erfindung darstellt, näher beschrieben. Dabei zeigen
Fig. 1 eine Schrägansicht eines Umfangsabschnittes eines Laufstreifens eines Fahrzeugluftreifens,
Fig. 2 eine Draufsicht auf einen Umfangsabschnitt der Abwicklung der Profilstrukturen aus Fig. 1,
Fig. 3 einen Schnitt entlang der Linie III-III der Fig. 2,
Fig. 4 einen Schnitt entlang der Linie IV-IV der Fig. 2,
Fig. 5 einen Schnitt entlang der Linie V-V der Fig. 2 und
Fig. 6 einen Schnitt entlang der Linie VI-VI der Fig. 2.

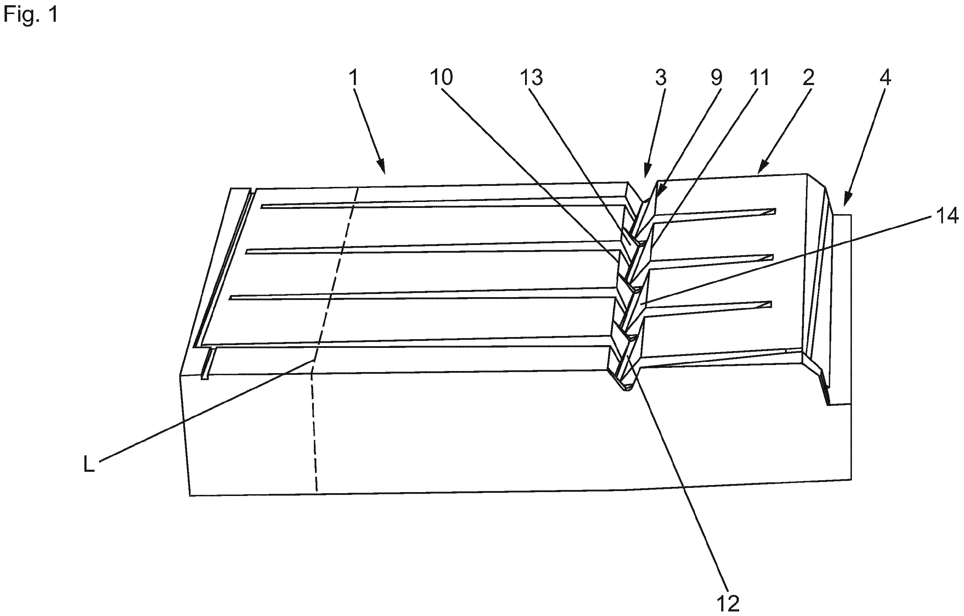

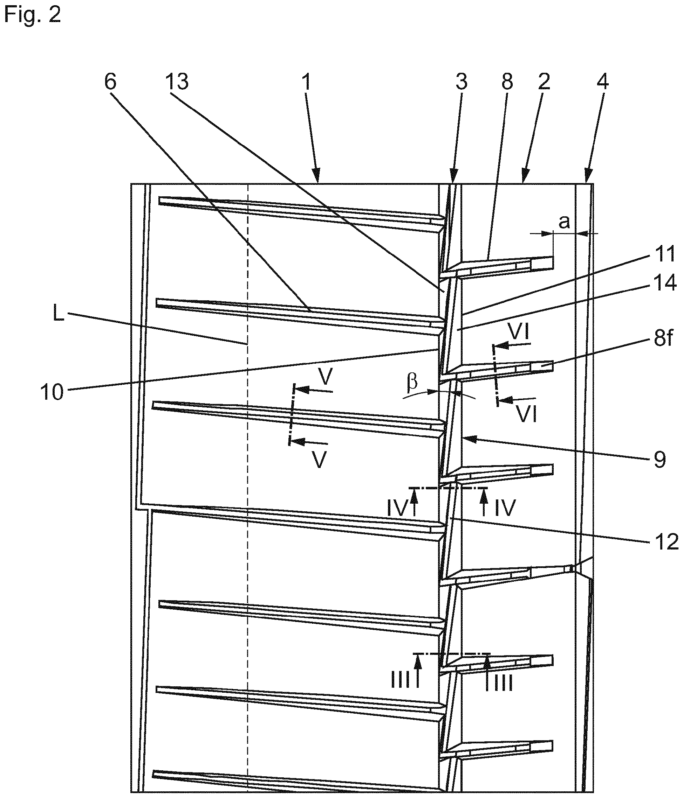

Fig. 1 und Fig. 2 zeigen eine schulterseitige Blockreihe 1 und ein blockartig strukturiertes Profilband 2 eines insbesondere für Personenkraftwagen geeigneten Laufstreifens eines Fahrzeugluftreifens. Die schulterseitige Blockreihe 1 und das blockartig strukturierte Profilband 2 sind insbesondere im außenseitigen Teilbereich eines sogenannten "asymmetrischen" Laufstreifenprofils angeordnet. Solche Laufstreifenprofile weisen in den beiden Laufstreifenhälften strukturell unterschiedlich gestaltete Profilierungen auf, die hinsichtlich bestimmter Eigenschaften des Reifens bzw. Laufstreifens entsprechend ausgeführt sind. Die schulterseitige Blockreihe 1 befindet sich bei der Außenschulter des Reifens, welche bekannterweise jener schulterseitige Bereich des Reifens ist, der bei am Fahrzeug montiertem Reifen an der Außenseite des Fahrzeuges sichtbar ist. Die in Fig. 1 und Fig. 2 in der schulterseitigen Blockreihe 1 angedeutete Linie L kennzeichnet den einen Rand des Laufstreifens, und zwar den Rand der bodenberührenden Fläche bzw. Bodenaufstandsfläche, die dem statisch ermittelten Footprint gemäß E.T.R.T.O.-Standards (Last bei 70 % der Tragfähigkeit bei einem Innendruck von 2,5 bar und bei einem Innendruck von 85 % von 2,5 bar) entspricht.

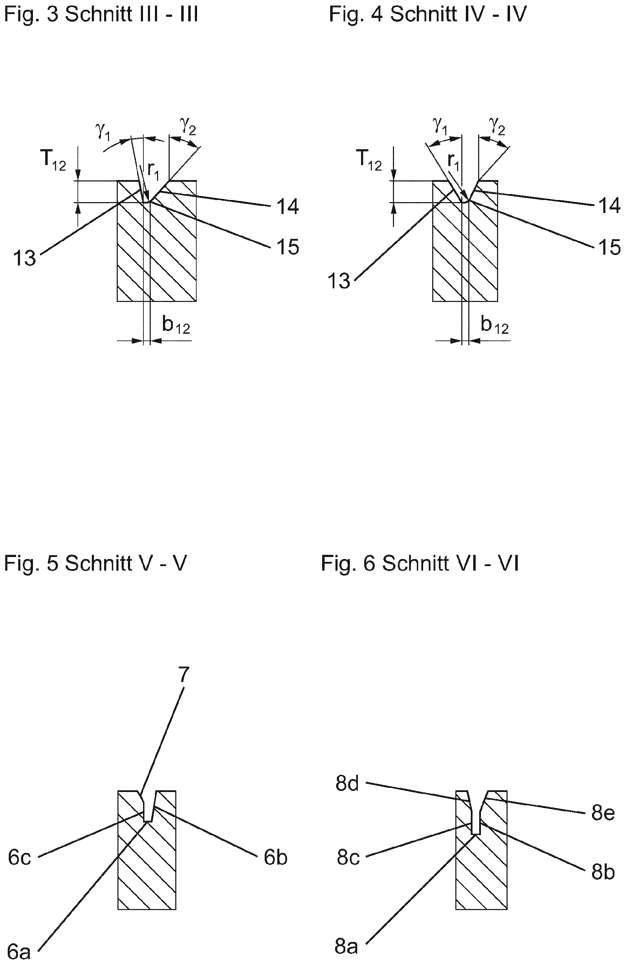

Die schulterseitige Blockreihe 1 ist vom blockartig strukturierten Profilband 2 durch eine im Folgenden näher beschriebene Umfangsrille 3 getrennt. An das blockartig strukturierte Profilband 2 schließt eine weitere, in den Figuren nur angedeutete Umfangsrille 4 und an diese nicht dargestellte weitere Profilstrukturen, die nicht Gegenstand der Erfindung sind. Die schulterseitige Blockreihe 1 setzt sich aus Blöcken 5 zusammen, die voneinander durch im Wesentlichen in Querrichtung verlaufende Querrillen 6 getrennt sind, die beim dargestellten Ausführungsbeispiel gerade verlaufen und, wie die Schnittdarstellung in Fig. 5 zeigt, einen schmalen, ca. 1,0 mm bis 2,0 mm breiten Rillengrund 6a, eine unter einem spitzen Winkel von etwa 7° verlaufende Rillenflanke 6b und, dieser gegenüberliegend, eine ausgehend vom Rillengrund 6a vorerst in radialer Richtung verlaufende Rillenflanke 6c aufweisen, welche über eine Fase 7, die unter einem spitzen Winkel von 20° bis 40° zur radialen Richtung verläuft, in die Laufstreifenoberfläche übergeht. Die Tiefe der Querrillen 6 beträgt in der Größenordnung von 50 % bis 70 % der maximalen Profiltiefe, die zwischen 6,0 mm und 8,0 mm gewählt wird.

Das blockartig strukturierte Profilband 2 erhält seine Strukturierung durch weitere Querrillen 8, die von der Umfangsrille 3 ausgehend ebenfalls im Wesentlichen in Querrichtung verlaufen, einen schmalen, ca. 1,0 mm bis 1,5 mm breiten Rillengrund 8a und Rillenflanken 8b und 8c aufweisen, die vorerst einen in radialer Richtung verlaufenden Abschnitt 8d und anschließend jeweils einen unter einem spitzen Winkel von 10° bis 30° zur radialen Richtung verlaufenden Abschnitt 8e aufweisen, welcher an der Laufstreifenoberfläche endet. Die Querrillen 8 enden mit einem kurzen, seichten und in Richtung ihrer Enden ansteigenden Abschnitt 8f entweder innerhalb der Profilbandes 2 in einem Abstand a von 2 mm bis 4 mm von der Umfangsrille 4, jede vierte Querrille 8 mündet mit einem derartigen Abschnitt in die Umfangsrille 4. Zwischen den in Umfangsrichtung benachbarten Querrillen 8 erfolgt eine Gliederung der Umfangsrille 3 in besonders gestaltete Umfangsabschnitte 9, auf welche nachfolgend noch näher eingegangen wird. Die Querrillen 6 münden jeweils in der Mitte bzw. im mittleren Bereich jedes Umfangsabschnittes 9 in die Umfangsrille 3. Dadurch ergibt sich ein gegenseitiger Versatz der Querrillen 8 zu den Querrillen 6 in Umfangsrichtung.

Die Umfangsrille 3 und somit auch ihre Umfangsabschnitte 9 sind an der Profiloberfläche von in Umfangsrichtung und parallel zueinander verlaufenden Kanten 10, 11 begrenzt. Jeder Umfangsabschnitt 9 weist einen Rillengrund 12 auf, welcher unter einen Winkel β zur Umfangsrichtung verläuft, welcher in sämtlichen Umfangsabschnitten 9 zumindest im Wesentlichen gleich groß ist und in der Größenordnung von 3° bis 10°, insbesondere etwa 5°, beträgt. Wie vor allem die Schnittdarstellungen in Fig. 3 und Fig. 4 zeigen, weist der Rillengrund 12 eine Breite b₁₂ auf, die 1,0 mm bis 1,5 mm beträgt. In Folge seiner Neigung zur Umfangsrichtung weist der Rillengrund 12 in jedem Umfangsabschnitt 9 ein laufstreifenaußenseitig und ein laufstreifeninnenseitig gelegenes Ende auf. Am laufstreifenaußenseitig gelegenen Ende beträgt die durch den Rillengrund 12 bestimmte Tiefe T₁₂ zwischen 20 % und 75 % der maximalen Profiltiefe des jeweiligen Laufstreifens. Zwischen dem Rillengrund 12 und der Laufstreifenoberfläche ist jeder Umfangsabschnitt 9 von zwei Rillenflanken 13 und 14 begrenzt. Die Rillenflanke 13, welche die dem Laufstreifenrand näher befindliche Rillenflanke ist, ist an einer Stelle durch die einmündende Querrille 6 unterbrochen. Zwischen der Rillenflanke 13 und dem Rillengrund 12 ist im Wesentlichen kein gerundeter oder kein nennenswert gerundeter Übergangsbereich gebildet, hier liegt ein üblicher Eckbereich vor. Zwischen dem Rillengrund 12 und der gegenüberliegenden Rillenflanke 14 ist eine Übergangsrundung 15 ausgebildet, deren Rundungsradius r 1,0 mm bis 2,0 mm, insbesondere 1,4 mm, beträgt. Jede Rillenflanke 13, 14 weist über ihre Erstreckung in Umfangsrichtung eine sich in radialer Richtung ändernde Neigung auf. Die Neigungsänderung erfolgt jeweils kontinuierlich, wobei die Rillenflanke 14 ihre Neigung in einem größeren Ausmaß ändert als die Rillenflanke 13, wobei die diesbezügliche Differenz insbesondere mindestens 3°, vorzugsweise mindestens 5°, beträgt. Die Rillenflanke 13 verläuft am laufstreifenaußenseitigen Ende des Rillengrundes 12 in radialer Richtung bzw. unter einem sehr kleinen Winkel von bis zu 7° zur radialen Richtung, ihr Neigungswinkel γ₁ wird in Richtung zum laufstreifeninnenseitigen Ende des Rillengrundes 12 bzw. Umfangsabschnittes 9 kontinuierlich größer und beträgt am laufstreifeninnenseitigen Ende des Rillengrundes 12 25° bis 40°, insbesondere bis zu 35°. Die Rillenflanke 14 schließt am laufstreifenaußenseitigen Ende des Rillengrundes 12 mit der radialen Richtung einen Winkel γ₂ ein, welcher 40° bis 60° beträgt. Am laufstreifeninnseitigen Ende beträgt der Neigungswinkel γ₂ der Rillenflanke 14 zur radialen Richtung 10° bis 35°, insbesondere bis zu 20°.

Durch die erfindungsgemäße, bezüglich der Umfangserstreckung der Umfangsrille 3 deutlich asymmetrische Ausgestaltung der Umfangsrillenabschnitte 9 wird einerseits eine sehr gute Entwässerung der Umfangsrille 3 in die Querrillen 6 und 8 gewährleistet und andererseits eine sehr gute Quersteifigkeit des Laufstreifens im Bereich der Blockreihe 1 und des Profilbandes 2 erzielt. Der Übergangsradius r₁ zwischen dem Rillengrund 12 und der weiter laufstreifeninnenseitig verlaufenden Rillenflanke 14 trägt dazu bei, dass bei höherer Handlingbeanspruchung des Fahrzeugluftreifens Spannungsspitzen am Rillengrund vermieden werden, er verhindert somit ein Einreißen des Laufstreifengummis im Bereich des Rillengrundes.

### Bezugsziffernliste

- 1: Blockreihe
- 2: Profilband
- 3: Umfangsrille
- 4: Umfangsrille
- 5: Block
- 6: Querrille
- 6a: Rillengrund
- 6b, 6c: Rillenflanke
- 7: Fase
- 8: Querrille
- 8a: Rillengrund
- 8b, 8c: Rillenflanke
- 8d, 8e, 8f: Abschnitt
- 9: Umfangsabschnitt
- 10: Kante
- 11: Kante
- 12: Rillengrund
- 13: Rillenflanke
- 14: Rillenflanke
- 15: Übergangsrundung
- a: Abstand
- b₁₂: Breite
- L: Laufstreifenrand
- r, r₁: Radius
- T₁₂: Tiefe
- β: Winkel
- γ₁, γ₂: Neigungswinkel

## Patentansprüche

1. Fahrzeugluftreifen mit einem Laufstreifen mit einer schulterseitigen Blockreihe (1), deren Blöcke (5) durch zumindest im Wesentlichen in Querrichtung verlaufende Querrillen (6) voneinander getrennt sind, und welche durch eine Umfangsrille (3) von einer weiteren Blockreihe oder einem blockartigen strukturierten Profilband (2) getrennt ist, in welcher bzw. in welchem weitere, zumindest im Wesentlichen in Querrichtung verlaufende Querrillen (8) vorgesehen sind, wobei die Umfangsrille (3) an der Laufstreifenoberfläche von zwei parallel zueinander und in Umfangsrichtung verlaufenden Kanten (10, 11) begrenzt ist und sich aus Umfangsabschnitten (9) zusammensetzt, in welchen der Rillengrund (12) jeweils unter einem spitzen Winkel (β) zur Umfangsrichtung verläuft und ein axial laufstreifenaußenseitig und ein axial laufstreifeninnenseitig gelegenes Ende aufweist, wobei zwischen dem Rillengrund (12) und der Laufstreifenoberfläche Rillenflanken (13, 14) verlaufen, deren Neigungswinkel (γ₁, γ₂) zur radialen Richtung sich über die Umfangserstreckung des Umfangsabschnittes (9) kontinuierlich und zueinander gegenläufig ändern,
**dadurch gekennzeichnet,**
**dass** sich in jedem Umfangsabschnitt (9) der Neigungswinkel (γ₂) der axial laufstreifeninnenseitig befindlichen Rillenflanke (14) in einem größeren Ausmaß ändert als der Neigungswinkel (γ₁) der gegenüberliegenden Rillenflanke (13).

2. Fahrzeugluftreifen nach Anspruch 1, **dadurch gekennzeichnet, dass** sich der Neigungswinkel (γ₂) der laufstreifeninnenseitig befindlichen Rillenflanke (14) um mindestens 3°, insbesondere um mindestens 5°, mehr ändert als der Neigungswinkel (γ₁) der gegenüberliegenden Rillenflanke (13).

3. Fahrzeugluftreifen nach Anspruch 1 oder 2, **dadurch gekennzeichnet, dass** sich der Neigungswinkel (γ₁) der laufstreifenaußenseitig befindlichen Rillenflanke (13) vom laufstreifenaußenseitigen Ende des Rillengrundes (12) bis zum laufstreifeninnenseitigen Ende des Rillengrundes (12) von 0° bis 7° zu 25° bis 40° ändert und dass sich der Neigungswinkel (γ2) der gegenüberliegenden Rillenflanke (14) vom laufstreifenaußenseitigen Ende des Rillengrundes (12) bis zum laufstreifeninnenseitigen Ende des Rillengrundes (12) von 40° bis 60° zu 10° bis 35° ändert.

4. Fahrzeugluftreifen nach einem der Ansprüche 1 bis 3, **dadurch gekennzeichnet, dass** sich die Umfangsabschnitte (9) zwischen den Querrillen (8) des weiter laufstreifeninnenseitig gelegenen blockartig strukturierten Profilbandes (2) bzw. der hier befindlichen Blockreihe erstrecken und die Querrillen (6) der schulterseitigen Blockreihe (1) jeweils etwa mittig in einen Umfangsabschnitt (9) einmünden.

5. Fahrzeugluftreifen nach einem der Ansprüche 1 bis 4, **dadurch gekennzeichnet, dass** die weiter laufstreifeninnenseitig verlaufende Rillenflanke (14) jedes Umfangsabschnittes (9) über eine Übergangsrundung (15) in den Rillengrund (12) übergeht.

6. Fahrzeugluftreifen nach Anspruch 5, **dadurch gekennzeichnet, dass** der Rundungsradius (r₁) der Übergangsrundung (15) 1,0 mm bis 2,0 mm beträgt.

7. Fahrzeugluftreifen nach einem der Ansprüche 1 bis 6, **dadurch gekennzeichnet, dass** der Rillengrund (12) eine Breite (b₁₂) von 1,0 mm bis 1,5 mm aufweist.

8. Fahrzeugluftreifen nach einem der Ansprüche 1 bis 7, **dadurch gekennzeichnet, dass** die schulterseitige Blockreihe (1) an dem der Außenschulter des Fahrzeugluftreifens zugeordneten Bereich des Laufstreifens verläuft.

## Claims

1. Pneumatic vehicle tyre comprising a tread with a shoulder-side row of blocks (1), the blocks (5) of which are separated from one another by transverse grooves (6) which run at least substantially in the transverse direction and which is separated by a circumferential groove (3) from a further row of blocks or a block-like structured profile band (2) in which further transverse grooves (8) running at least substantially in the transverse direction are provided, wherein the circumferential groove (3) is delimited at the surface of the tread by two edges (10, 11) running parallel to one another and in the circumferential direction and is made up of circumferential portions (9) in which the groove base (12) in each case runs at an acute angle (β) to the circumferential direction and has one end positioned axially to the outside of the tread and one end positioned axially to the inside of the tread, wherein between the groove base (12) and the surface of the tread there run groove flanks (13, 14), the angles of inclination (γ₁, γ₂) of which in relation to the radial direction change continuously and oppositely to one another over the circumferential extent of the circumferential portion (9),
**characterized**
**in that**, in each circumferential portion (9), the angle of inclination (γ₂) of the groove flank (14) that is axially on the inside of the tread changes to a greater extent than the angle of inclination (γ₁) of the opposite groove flank (13).

2. Pneumatic vehicle tyre according to Claim 1, **characterized in that** the angle of inclination (γ₂) of the groove flank (14) that is on the inside of the tread changes by at least 3°, in particular by at least 5°, more than the angle of inclination (γ₁) of the opposite groove flank (13).

3. Pneumatic vehicle tyre according to Claim 1 or 2, **characterized in that** the angle of inclination (γ₁) of the groove flank (13) that is on the outside of the tread changes from the end of the groove base (12) positioned to the outside of the tread to the end of the groove base (12) positioned to the inside of the tread from between 0° and 7° to between 25° and 40° and **in that** the angle of inclination (γ₂) of the opposite groove flank (14) changes from the end of the groove base (12) positioned to the outside of the tread to the end of the groove base (12) positioned to the inside of the tread from between 40° and 60° to between 10° and 35°.

4. Pneumatic vehicle tyre according to one of Claims 1 to 3, **characterized in that** the circumferential portions (9) extend between the transverse grooves (8) of the block-like structured profile band (2) positioned further to the inside of the tread or the row of blocks located there and the transverse grooves (6) of the shoulder-side row of blocks (1) in each case open out approximately centrally into a circumferential portion (9).

5. Pneumatic vehicle tyre according to one of Claims 1 to 4, **characterized in that** the groove flank (14) of each circumferential portion (9) running further to the inside of the tread goes over into the groove base (12) by way of a transitional rounded portion (15).

6. Pneumatic vehicle tyre according to Claim 5, **characterized in that** the rounding radius (r₁) of the transitional rounded portion (15) is between 1.0 mm and 2.0 mm.

7. Pneumatic vehicle tyre according to one of Claims 1 to 6, **characterized in that** the groove base (12) has a width (b₁₂) of between 1.0 mm and 1.5 mm.

8. Pneumatic vehicle tyre according to one of Claims 1 to 7, **characterized in that** the shoulder-side row of blocks (1) runs on the region of the tread that is assigned to the outer shoulder of the pneumatic vehicle tyre.

## Revendications

1. Pneumatique de véhicule comprenant une bande de roulement avec une rangée de blocs (1) du côté de l'épaulement, dont les blocs (5) sont séparés les uns des autres par des rainures transversales (6) s'étendant au moins sensiblement dans la direction transversale, et qui est séparée par une rainure périphérique (3) d'une autre rangée de blocs ou d'une bande profilée (2) structurée de type blocs, dans laquelle sont prévues d'autres rainures transversales (8) s'étendant au moins essentiellement dans la direction transversale, la rainure périphérique (3) étant limitée au niveau de la surface de la bande de roulement par deux arêtes (10, 11) s'étendant parallèlement l'une à l'autre et dans la direction périphérique et se composant de portions périphériques (9) dans lesquelles le fond de rainure (12) s'étend à chaque fois suivant un angle aigu (β) par rapport à la direction périphérique et présente une extrémité placée axialement du côté extérieur de la bande de roulement et une extrémité placée axialement du côté intérieur de la bande de roulement, des flancs de rainure (13, 14) s'étendant entre le fond de rainure (12) et la surface de la bande de roulement, dont les angles d'inclinaison (γ₁, γ₂) varient par rapport à la direction radiale en continu et en sens inverse l'un de l'autre sur l'étendue périphérique de la portion périphérique (9),
**caractérisé en ce que**
dans chaque portion périphérique (9), l'angle d'inclinaison (γ₂) du flanc de rainure (14) se trouvant axialement du côté intérieur de la bande de roulement varie dans une plus grande mesure que l'angle d'inclinaison (γ₁) du flanc de rainure opposé (13).

2. Pneumatique de véhicule selon la revendication 1, **caractérisé en ce que** l'angle d'inclinaison (γ₂) du flanc de rainure (14) se trouvant du côté intérieur de la bande de roulement varie d'au moins 3° de plus, en particulier d'au moins 5° de plus que l'angle d'inclinaison (γ₁) du flanc de rainure opposé (13).

3. Pneumatique de véhicule selon la revendication 1 ou 2, **caractérisé en ce que** l'angle d'inclinaison (γ₁) du flanc de rainure (13) se trouvant du côté extérieur de la bande de roulement varie depuis l'extrémité du fond de rainure (12) du côté extérieur de la bande de roulement jusqu'à l'extrémité du fond de rainure (12) du côté intérieur de la bande de roulement de 0° à 7° jusqu'à 25° à 40° et **en ce que** l'angle d'inclinaison (γ₂) du flanc de rainure opposé (14) varie depuis le l'extrémité du fond de rainure (12) du côté extérieur de la bande de roulement jusqu'à l'extrémité du fond de rainure (12) du côté intérieur de la bande de roulement de 40° à 60° jusqu'à 10° à 35°.

4. Pneumatique de véhicule selon l'une quelconque des revendications 1 à 3, **caractérisé en ce que** les portions périphériques (9) s'étendent entre les rainures transversales (8) de la bande profilée structurée de type blocs (2) placée davantage du côté intérieur de la bande de roulement ou de la rangée de blocs se trouvant à cet endroit, et les rainures transversales (6) de la rangée de blocs (1) du côté de l'épaulement débouchent à chaque fois approximativement centralement dans une portion périphérique (9).

5. Pneumatique de véhicule selon l'une quelconque des revendications 1 à 4, **caractérisé en ce que** le flanc de rainure (14) de chaque portion périphérique (9) s'étendant davantage du côté intérieur de la bande de roulement se prolonge par un arrondi de transition (15) dans le fond de rainure (12).

6. Pneumatique de véhicule selon la revendication 5, **caractérisé en ce que** le rayon d'arrondi (r₁) de l'arrondi de transition (15) mesure 1,0 mm à 2,0 mm.

7. Pneumatique de véhicule selon l'une quelconque des revendications 1 à 6, **caractérisé en ce que** le fond de rainure (12) présente une largeur (b₁₂) de 1,0 mm à 1,5 mm.

8. Pneumatique de véhicule selon l'une quelconque des revendications 1 à 7, **caractérisé en ce que** la rangée de blocs (1) du côté de l'épaulement s'étend sur la région de la bande de roulement associée à l'épaulement extérieur du pneumatique de véhicule.
